# EUROPEAN PATENT APPLICATION

(11) **EP 2 412 681 A1**
(43) Date of publication of application: **01.02.2012**
(21) Application number: 10755885.0
(22) Date of filing: 11.03.2010
(51) Int. Cl.: C02F 3/12, C02F 1/44

(54) **METHOD FOR TREATING ORGANIC MATTER-CONTAINING LIQUID**

(30) Priority: 25.03.2009 JP 2009075052
(71) Applicant: Ibiden Co., Ltd., Gifu 503-8604 (JP)
(72) Inventor: HIBI, Yoshihisa, Gifu 5038604 (JP)
(74) Representative: Berryman, Natalia Grace
(86) International application number: PCT/JP2010/054133
(87) International publication number: WO 2010/110085

(57) **Abstract**

A method of treating an organic substance-containing liquid, including aerating a biological treatment liquid obtained by mixing an activated sludge and an organic substance-containing liquid, and subjecting the biological treatment liquid to a filtration separation with a filter material immersed in the biological treatment liquid to obtain a filtrate, wherein the biological treatment liquid contains inorganic particles at least immediately before the filtration separation, wherein a lower limit of the mixed liquor suspended solids in the biological treatment liquid is 35,000 mg/L, and an upper limit thereof is 130,000 mg/L. The method of treating an organic substance-containing liquid of the present invention exhibits an effect that two demands of improvement in treatment efficiency and maintenance of the improved treatment efficiency can be simultaneously met.

## Description

### TECHNICAL FIELD

The present invention relates to a method of treating an organic substance-containing liquid such as metal plating waste liquids and waste liquids from cleaning printed-circuit boards.

### BACKGROUND ART

Conventionally, as methods of treating organic substance-containing liquids, a method including the steps of aerating a biological treatment liquid obtained by mixing an activated sludge and an organic substance-containing liquid, and subjecting the biological treatment liquid to filtration separation with a filter material immersed in the biological treatment liquid to obtain a filtrate, and discharging the filtrate from the system is well known.

Patent Publication 1 discloses a technique in which a high mixed liquor suspended solids (MLSS) is lowered to 5,000 to 20,000 mg/L, so that a BOD sludge load is increased to 0.15 to 0.40 kg-BOD/kg-VSS/day, thereby suppressing deterioration of membrane life due to an increase in an amount of aeration corresponding to a high MLSS and increasing treatment efficiency.

Patent Publication 2 discloses a technique in which an iron salt having an activated sludge concentration of from 10 to 45% by mass is added to a biological treatment tank, and a pH of a liquid inside the treatment tank is adjusted to from 5 to 6.5, thereby preventing clogging of a membrane.

Patent Publication 3 discloses a technique in which inorganic particles having a specific gravity of from 1.5 to 5 are allowed to be present in a biological treatment tank in a concentration of from 1,000 to 20,000 mg/L, and the inorganic particles and an aerobic microorganism are integrated, thereby increasing a sludge concentration (MLSS: 5,000 to 20,000 mg/L) to perform a high-load treatment.

Patent Publication 4 discloses a technique in which a concentrated sludge of a membrane separation tank is returned, so that MLSS in an aeration tank is maintained at a concentration of from 50,000 to 100,000 mg/L, and a BOD sludge load of the aeration tank is adjusted to 0.05 to 0.01 kg-BOD/(kg-MLSS•day), thereby suppressing the generation of an excess sludge.

### PRIOR ART PUBLICATIONS

### PATENT PUBLICATIONS

Patent Publication 1: Japanese Patent Laid-Open No. 2003-53363
Patent Publication 2: Japanese Patent Laid-Open No. 2008-200639
Patent Publication 3: Japanese Patent Laid-Open No. Hei-9-38681
Patent Publication 4: Japanese Patent Laid-Open No. 2002-192182

### SUMMARY OF THE INVENTION

### PROBLEMS TO BE SOLVED BY THE INVENTION

In the treatment of an organic substance-containing liquid, it is demanded to increase treatment efficiency of the organic substance-containing liquid and to maintain high treatment efficiency. However, in prior art, these demands could not be met simultaneously. This is because if the treatment is continued under the conditions of high MLSS in order to increase the treatment efficiency, the filtration property of a filter material is lowered, whereby consequently a high treatment efficiency cannot be maintained.

Therefore, an object of the present invention is to provide a method of treating an organic substance-containing liquid capable of simultaneously meeting two demands of improvement in treatment efficiency and maintenance of improved treatment efficiency.

### MEANS TO SOLVE THE PROBLEMS

Specifically, the gist of the present invention relates to:
[1] a method of treating an organic substance-containing liquid, comprising aerating a biological treatment liquid obtained by mixing an activated sludge and an organic substance-containing liquid, and subjecting the biological treatment liquid to a filtration separation with a filter material immersed in the biological treatment liquid to obtain a filtrate,
   wherein the above biological treatment liquid contains inorganic particles at least immediately before the filtration separation, wherein a lower limit of the mixed liquor suspended solids is 35,000 mg/L, and an upper limit thereof is 130,000 mg/L.

The method of treating an organic substance-containing liquid of the present invention exhibits an effect that two demands of improvement in treatment efficiency and maintenance of the improved treatment efficiency can be simultaneously met.

### BRIEF DESCRIPTION OF THE DRAWINGS

[Figure 1] Figure 1 is a diagram showing one example of treatment flow for a method of treating an organic substance-containing liquid (degreasing agent-containing liquid) of the present invention.
[Figure 2] Figure 2 is a diagram showing one example of treatment flow for a method of treating an organic substance-containing liquid (degreasing agent-containing liquid) of the present invention.
[Figure 3] Figure 3 is a photomicrograph showing a particle structure of inorganic particles contained in a biological treatment liquid in Example 1.
[Figure 4] Figure 4 is a photomicrograph showing a particle structure of inorganic particles contained in a biological treatment liquid in Example 2.
[Figure 5] Figure 5 is a photomicrograph showing a particle structure of inorganic particles contained in a biological treatment liquid (precipitates in a filtration tank 6) in Example 2.
[Figure 6] Figure 6 is a photomicrograph showing the observation results of SEM in Example 2.
[Figure 7] Figure 7 is a photomicrograph showing the observation results of SEM in Example 2.
[Figure 8] Figure 8 is a diagram showing one example of treatment flow for a method of treating an organic substance-containing liquid (degreasing agent-containing liquid) of the present invention.
[Figure 9] Figure 9 is a photomicrograph showing a particle structure of inorganic particles contained in a biological treatment liquid in Example 4.
[Figure 10] Figure 10 is a photomicrograph showing the observation results of SEM in Example 4.
[Figure 11] Figure 11 is a photomicrograph showing the observation results of SEM in Example 4.

### MODES FOR CARRYING OUT THE INVENTION

The present invention will be hereinafter described in detail by specific embodiments for a method of treating an organic substance-containing liquid. The organic substance-containing liquid which is the subject for the method of treatment according to the present invention is not particularly limited so long as the organic substance-containing liquid is a liquid that contains an organic substance. Further, an organic substance-containing liquid containing various kinds of metal ions, especially, divalent metal ions is also subject for the method of treatment of the present invention.

Specific examples of the organic substance-containing liquid include, for example, waste liquids discharged from plating factories, printed circuit board factories, and the like, printed board cleaning waste liquids, waste liquids pertaining to plating bath (catalyst giving, copper plating, nickel plating, gold plating), etching waste liquids, oxidation-reduction agent-containing waste liquids, waste liquids from food processing factories, domestic waste waters, human excrement night soils, and the like. The printed board cleaning waste liquids contain, for example, chemicals for cleaning, bath adjusting agents, and the like as organic substances. In the present invention, the waste liquids discharged from plating factories, printed circuit board factories, and the like, the printed board cleaning waste liquids, the waste liquids pertaining to plating baths, the etching waste liquids, the oxidation-reduction agent-containing waste liquids, and the like are also referred to as a "degreasing agent-containing liquid." The method of treatment according to the present invention is capable of treating not only a single kind of an organic substance-containing liquid but also a mixture of plural kinds of organic substance-containing liquids.

The organic substance in the present invention includes, for example, alcohols, amide-based compounds, melamine-based compounds, aliphatic compounds, ethers, polysaccharides, sulfide compounds, higher alkyl sulfate compounds , alkyl thiosulfate compounds, nitrogen-containing alkyl compounds, and phosphoric acid compounds. More specifically, the organic substance includes, for example, methanol, ethanol, acetone, 1-butanol, butyl cellosolve, butyl carbitol, toluenesulfonamide, polyoxyalkylene glycol, dipropylene glycol ether, monoethanolamine, polyoctyl phenyl ether having an average molecular weight of from 696 to 872, isopropyl alcohol, ethylene glycol, N,N'-dimethylformamide, benzimidazole having an alkyl group having 1 to 4 carbon atoms, and alkyl sulfates having 20 to 22 carbon atoms. The organic substance-containing liquid may contain only one kind of these specific examples as an organic substance, or may contain plural kinds thereof.

In a case where an organic substance-containing liquid is a degreasing agent-containing liquid, for example, a waste liquid discharged from plating factories, the organic substance-containing liquid can contain copper ions, nickel ions, gold ions, and the like as metal ions originated from plating.

In the method of treatment of the present invention, the treatment of an organic substance-containing liquid is carried out, for example, through the following treatment flow. In this case, a treatment flow would differ depending upon whether or not an organic substance-containing liquid contains metal ions.

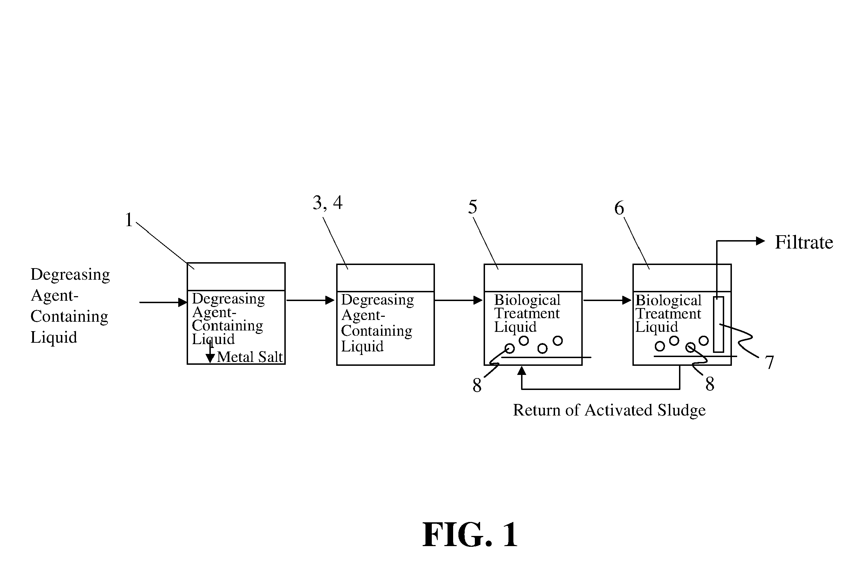

As shown in Figure 1, in a case where an organic substance-containing liquid (a degreasing agent-containing liquid) contains metal ions, an organic substance-containing liquid is treated, for example, through the following treatment flow.
Organic substance-containing liquid (Degreasing agent-containing liquid → Metal removal tank 1 → pH Adjustment tank 3 → Relay tank 4 →Aeration tank 5 → Filtration tank 6 → Discharging filtrate

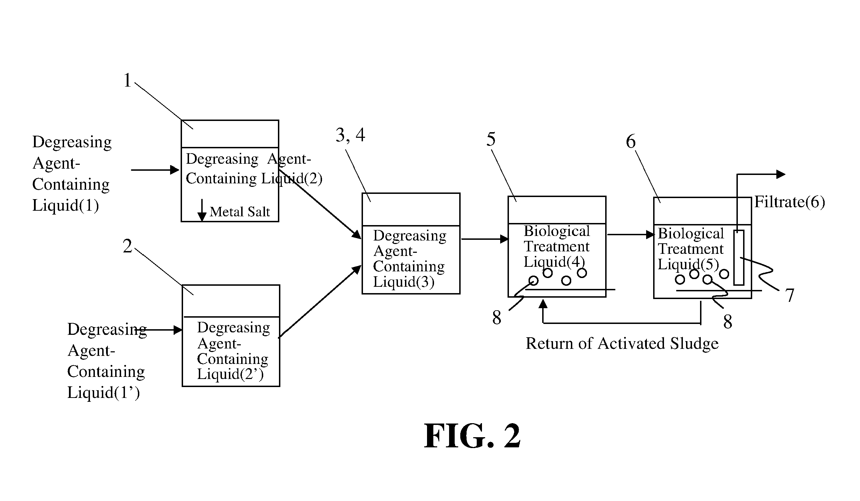

As shown in Figure 2, in a case where an organic substance-containing liquid (a degreasing agent-containing liquid) does not contain metal ions, an organic substance-containing liquid is treated, for example, through the following treatment flow.
Organic substance-containing liquid (Degreasing agent-containing liquid → Reservoir 2 → pH Adjustment tank 3 → Relay tank 4 → Aeration tank 5 → Filtration tank 6 → Discharging filtrate

Each of the tanks mentioned above is explained hereinbelow.

### < Metal Removal Tank 1>

In the metal removal tank 1, metal ions are removed from an organic substance-containing liquid containing metal ions. The removal means for metal ions include, for example, hydroxide treatment (neutralization treatment), sulfidation treatment, reduction treatment, chelating treatment, and ion-exchange treatment. These means may be used alone or a combination with each other. In the neutralization treatment, the sulfidation treatment, and the chelating treatment, metal ions are precipitated as a metal salt, and the metal salt is sedimented with an aggregating agent, and removed from an organic substance-containing liquid by filtration or the like.

Since a biological treatment liquid mentioned below can easily contain inorganic particles, it is preferable that an inorganic ion-containing chemical such as calcium hydroxide is added to a metal removal tank 1. In this case, since inorganic ions are dissolved in an organic substance-containing liquid after the treatment step in a metal removal tank 1, inorganic ions are also dissolved in a biological treatment liquid obtained in a subsequent treatment step. In a case where a biological treatment liquid contains calcium ions as inorganic ions, calcium ions are reacted with carbon dioxide by aeration of the air to form calcium carbonate. As a result, calcium carbonate particles are formed as inorganic particles in the biological treatment liquid.

In a case where an organic substance-containing liquid containing copper ions as metal ions is subjected to a neutralization treatment with calcium hydroxide, the copper ions are precipitated out as copper hydroxide and removed from the organic substance-containing liquid. Since the copper ions can be more efficiently removed and collected, it is preferable that calcium hydroxide and sodium hydroxide are used together.

Also, in the present invention, the removal of metal ions in the organic substance-containing liquid by a sulfidation treatment with sodium hydrogensulfide can be exemplified as one of preferred embodiments. In this embodiment, it is preferable that sodium hydrogensulfide is added after a pH of the organic substance-containing liquid is adjusted to an alkaline side, and it is more preferable that sodium hydrogensulfide is added after the pH is adjusted to from 9.0 to 9.5. Usually, a sulfidation treatment is carried out at a pH of the organic substance-containing liquid in an acidic side, and in this instance, hydrogen sulfide is generated. On the other hand, in the present embodiment, there are some advantageous effects that hydrogen sulfide accompanying a sulfidation treatment would not be generated by adjusting pH of the organic substance-containing liquid to an alkaline side. Further, the pH can be adjusted in a stable state by having a pH of the organic substance-containing liquid of 9.0 or more. In addition, dissociation of copper ions from copper sulfide formed by a sulfidation treatment can be prevented by having a pH of the organic substance-containing liquid to 9.5 or less. It is preferable that the amount of sodium hydrogensulfide in this embodiment is an amount excess to sodium hydrogensulfide that is necessary in subjecting an entire amount of the metal ions in the organic substance-containing liquid to a sulfidation treatment, specifically 1.1 times the amount is preferred. The time period for the sulfidation treatment in this embodiment is, for example, from 30 minutes to 1 hour.

### < Reservoir 2 >

In a case where an organic substance-containing liquid does not contain metal ions, the metal removal mentioned above would be unnecessary, the organic substance-containing liquid is stored in a reservoir 2 in order to introduce a given amount of the organic substance-containing liquid into a pH adjustment tank 3.

### < pH Adjustment Tank 3 >

In the pH adjustment tank 3, for example, a pH of an organic substance-containing liquid from which metal ions are removed is adjusted to a range suitable for the biological treatment. Specifically, a pH of an organic substance-containing liquid at 25°C is adjusted to preferably from 6 to 9. In the adjustment of pH, for example, a diluted hydrochloric acid, a diluted sulfuric acid, and an aqueous sodium hydroxide solution are used. In the pH adjustment tank 3, the parameters other than the pH of an organic substance-containing liquid do not need to be adjusted to a range suitable for a biological treatment. In this case, , these parameters can be adjusted to an appropriate range in a tank in a subsequent treatment step.

### < Relay Tank 4 >

In the relay tank 4, since a given amount of an organic substance-containing liquid is stored, an amount of an organic substance-containing liquid introduced into an aeration tank 5 is kept at a stabilized state. In a relay tank 4, a nutrient for microbes in an activated sludge may be added. Specific examples of the nutrient include, for example, magnesium compounds, silicon compounds, and nutrients for bacterial culture, and these are added in the form kept in a powdery state to a relay tank 4. The nutrient may be added to a treatment tank other than a relay tank 4, for example, an aeration tank 5 and a filtration tank 6. The magnesium compound, the silicon compound, and the nutrient for bacterial culture may be added in a mixed state in given proportions, or the nutrients may be separately added. Further, in a case where biochemical oxygen demand (BOD), and the ratios of nitrogen and phosphorus in the organic substance-containing liquid fluctuate with passage of time and are uneven, it is preferable that the BOD, the ratios of nitrogen and phosphorus are stabilized by adding a phosphoric acid compound or an ammonium compound.

A reservoir 2, a pH adjustment tank 3, and a relay tank 4 mentioned above are tanks that are provided as occasion demands, and may be omitted. Also, for example, a pH adjustment tank 3 may be omitted and a relay tank 4 may also serve as a pH adjustment tank 3, or the order of a pH adjustment tank 3 and a relay tank 4 may be replaced.

### < Aeration Tank 5 >

In an aeration tank 5, an organic substance-containing liquid and activated sludge are mixed under aerated atmosphere. At this time, an organic substance in the organic substance-containing liquid is biologically treated by the actions of microbes in an activated sludge. The number of aeration tanks 5 is not limited, and plural aeration tanks 5 may be provided. In this case, each of the aeration tanks 5 are serially connected or they may be connected in parallel. In a case where plural aeration tanks 5 are provided, parameters relating to the biological treatment liquid inside an aeration tank 5 in the present invention (for example, MLSS, MLVSS/MLSS, pH, temperature, ORP, DO, viscosity and aerated amount and the like ) may be applied to a part of an aeration tank 5 of the plural aeration tanks 5, or may be applied to all the aeration tanks 5.

An activated sludge is previously introduced into the aerated tank 5. Moreover, an organic substance-containing liquid from a relay tank 4 is introduced into the aeration tank 5, to be mixed with the activated sludge, to give a biological treatment liquid. In other words, a biological treatment liquid is a liquid mixture of an organic substance-containing liquid and an activated sludge. The biological treatment liquid inside the aeration tank 5 is stirred, while aerating with, for example, a diffused aeration. By this aeration and stirring, an organic substance in the organic substance-containing liquid constituting the biological treatment liquid is aerobically biologically treated by actions of microbes in the activated sludge. In the aeration 8, the air may be used, or any gases may be selectively used.

A biological treatment liquid originated from an organic substance-containing liquid from which metal removal was carried out with an inorganic ion-containing chemical, for example, calcium hydroxide contains calcium ions as inorganic ions. The calcium ions are reacted with carbon dioxide in the air by aeration using the air, to form an inorganic substance having low solubility to a solvent (example: water), so that inorganic particles are formed in the biological treatment liquid. At this time, fine inorganic particles are formed in the biological treatment liquid by stirring the biological treatment liquid by aeration.

The biological treatment of an organic substance in the organic substance-containing liquid is not limited to an aerobic treatment, and the biological treatment may be carried out by an anaerobic treatment, or may be in a combined use of an aerobic treatment and an anaerobic treatment. In a case where an organic substance-containing liquid containing inorganic ions is anaerobically treated, for example, an organic substance-containing liquid is anaerobically biologically treated, and thereafter the biological treatment liquid is aerated, whereby inorganic particles can be formed in the biological treatment liquid.

The lower limit of MLSS of the biological treatment liquid in an aeration tank 5 is 35,000 mg/L, preferably 40,000 mg/L, and more preferably 45,000 mg/L. In addition, the upper limit of MLSS of the biological treatment liquid is 130,000 mg/L, preferably 120,000 mg/L, and more preferably 110,000 mg/L. In the present invention, MLSS refers to a value defined as suspended substance as prescribed in JIS K0102. The lower limit of MLSS in the biological treatment liquid is 35,000 mg/L, from the viewpoint of sufficiently obtaining the proportions of microbes derived from the activated sludge in the biological treatment liquid, and improving efficiency of treating an organic substance-containing liquid. The upper limit of MLSS in the biological treatment liquid is 130,000 mg/L, from the viewpoint of preventing a ratio of the activated sludge in the biological treatment liquid from becoming exceedingly high, thereby making it impossible to maintain an appropriate biological treatment state. In other words, by setting the upper limit and the lower limit of MLSS to the values mentioned above, the efficiency of treating an organic substance-containing liquid can be increased and an appropriate biological treatment state can be maintained.

The lower limit and the upper limit of MLSS of the biological treatment liquid in the present invention are a lower limit and an upper limit of the found values of MLSS of the biological treatment liquid in the treatment time period of the organic substance-containing liquid. Therefore, for example, MLSS of the biological treatment liquid at the initial rise of the treatment of the organic substance-containing liquid, and during maintenance or the like of each of the tanks is excluded.

The lower limit of the ratio of the mixed liquor volatile suspended solids (MLVSS) to the MLSS, i.e. MLVSS/MLSS, of the biological treatment liquid in the aeration tank 5 is preferably 0.2, and more preferably 0.25. In addition, the upper limit of MLVSS/MLSS is preferably 0.5, and more preferably 0.4. In the present invention, MLVSS refers to a value defined as a strong heat loss amount in JIS K0102. The lower limit of MLVSS/MLSS in the biological treatment liquid is preferably 0.2, from the viewpoint of sufficiently obtaining the proportions of the microbes derived from activated sludge in the biological treatment liquid, and improving the efficiency of treating an organic substance-containing liquid. The upper limit of MLVSS/MLSS in the biological treatment liquid is preferably 0.5, from the viewpoint of preventing a ratio of the microbes derived from an activated sludge in the biological treatment liquid from becoming exceedingly high, thereby making it impossible to maintain an appropriate biological treatment state. In other words, by setting the lower limit and the upper limit of MLVSS/MLSS to the values mentioned above, the efficiency of treating an organic substance-containing liquid can be effectively increased, and an appropriate biological treatment state can be easily maintained.

The lower limit and the upper limit of MLVSS/MLSS of the biological treatment liquid in the present invention are a lower limit and an upper limit of MLVSS/MLSS, calculated from the found values of MLSS and MLVSS of the biological treatment liquid in the treatment time period of the organic substance-containing liquid. Therefore, for example, MLVSS/MLSS of the biological treatment liquid at the initial rise of the treatment of the organic substance-containing liquid, and during maintenance or the like of each of the tanks is excluded.

The biological treatment liquid inside an aeration tank 5 may contain inorganic particles or may not contain them. It is preferable that the inorganic particles have low solubility in a solvent of a biological treatment liquid, and have inactivity against a biological treatment of an organic substance-containing liquid with an activated sludge. The inorganic particles include, for example, calcium carbonate particles, calcium sulfate particles, and silicon-containing compound particles. The inorganic particles may be derived from inorganic ions in a biological treatment liquid, or may be added to a biological treatment liquid from outside of the system.

The pH of a biological treatment liquid at 25°C is preferably from 6.0 to 9.0, more preferably from 6.5 to 8.5, even more preferably from 7.0 to 8.5, and most preferably from 7.5 to 8.0, from the viewpoint of controlling the solubility of the inorganic particles in a solvent low and increasing the efficiency of treating an organic substance-containing liquid. By setting a pH of a biological treatment liquid in these ranges, the disappearance of the inorganic particles by dissolution thereof can be prevented, and the efficiency of treating an organic substance-containing liquid can be effectively increased. In the adjustment of a pH, for example, a diluted hydrochloric acid, a diluted sulfuric acid, and an aqueous sodium hydroxide solution are used.

The temperature of the biological treatment liquid is preferably from 10° to 55°C, and more preferably from 25° to 37°C. By setting the temperature of the biological treatment liquid to these ranges, the efficiency of treating an organic substance-containing liquid can be effectively increased.

The oxidation-reduction potential (ORP) of a biological treatment liquid is not particularly limited, and its lower limit is preferably -50 mV, and more preferably 0 mV. In addition, the upper limit of the ORP is preferably 250 mV, and more preferably 150 mV. By setting the lower limit and the upper limit of the oxidation-reduction potential to these values, the efficiency of treating an organic substance-containing liquid can be effectively increased. The oxidation-reduction potential of a biological treatment liquid is adjusted by adding, for example, a 5% by weight aqueous hydrogen peroxide solution.

The amount of dissolved oxygen (DO) of a biological treatment liquid is not particularly limited, and the amount of dissolved oxygen is preferably from 1 to 8 mg/L. By setting the amount of dissolved oxygen of a biological treatment liquid to this range, the efficiency of treating an organic substance-containing liquid can be effectively increased.

The viscosity of a biological treatment liquid at 25°C is not particularly limited, and the viscosity is preferably from 20 to 200 mPa•s. The viscosity of a biological treatment liquid is primarily ascribed to a sludge concentration of the biological treatment liquid. It is preferable that the viscosity of a biological treatment liquid is 20 mPa•s or more, from the viewpoint of sufficiently obtaining the proportion of the microbes derived from activated sludge in a biological treatment liquid, and improving the efficiency of treating an organic substance-containing liquid. It is preferable that the viscosity of biological treatment liquid is 200 mPa•s or less, from the viewpoint of facilitating stirring and aeration of a biological treatment liquid. In other words, by setting the viscosity of the biological treatment liquid to the above-mentioned range, the efficiency of treating an organic substance-containing liquid can be effectively increased, and an appropriate biological treatment state can be maintained.

The aeration amount in the aeration tank 5 is, for example, preferably from 3 to 7 m³/hr, per bottom area (m²) of the aeration tank, and more preferably from 4 to 5 m³/hr. By setting the aeration amount in the aeration tank 5 to these ranges, an appropriate biological treatment state in the aeration tank 5 can be maintained.

### < Filtration Tank 6 >

In a filtration tank 6, a biological treatment liquid is subjected to filtration separation into an activated sludge and a filtrate, using a filter material 7 provided in the filtration tank 6. Also in the filtration tank 6, a biological treatment of an organic substance-containing liquid is progressed by an activated sludge in the biological treatment liquid. An aeration tank 5 and a filtration tank 6 may be combinedly used in a single treatment tank. In addition, the number of a filtration tank 6 is not limited, and plural filtration tanks 6 may be provided. In a case where plural filtration tanks 6 are provided, parameters relating to a biological treatment liquid inside the filtration tank 6 in the present invention (for example, MLSS, MLVSS/MLSS, pH, temperature, ORP, DO, viscosity, aeration amount, and particle size of solid content and the like) may be applied only to some of filtration tanks 6 of the plural filtration tanks, or to all the filtration tanks 6.

A biological treatment liquid inside an aeration tank 5 is introduced into a filtration tank 6 by, for example, overflow. A filter material 7 for separating a filtrate from a biological treatment liquid by filtration is provided in the filtration tank 6. At least a part of the filter material 7 is immersed in a biological treatment liquid, and a filtrate is separated from an activated sludge and discharged to the outside of the system by, for example, suction with a pump provided in a pipe connected to the filter material 7. The filtration separation of a biological treatment liquid is carried out continuously or intermittently. The filter material 7 is not particularly limited, so long as a biological treatment liquid can be separated by filtration therewith. The filter material 7 includes, for example, an immersion membrane. In a case where an immersion membrane is used, plural immersion membranes may be combined to construct a unit, and the unit may be immersed in a biological treatment liquid.

A material for an immersion membrane constituting a filter material 7 is not particularly limited, and the materials include, for example, polyethylene, polysulfone, poly(ether sulfone), poly(vinylidene fluoride), cellulose acetate, and derivatives thereof, and the like. It is preferable that the surface of an immersion membrane is subjected to a hydrophilic treatment, from the viewpoint of membrane separation property and an effect of preventing membrane from soiling. The shape of the immersion membrane includes, for example, a hollow fiber membrane, a tubular membrane, and a flat membrane.

The average pore size of the immersion membrane is preferably from 0.05 to 0.5 µm, and more preferably from 0.08 to 0.4 µm. By setting the average pore size of the immersion membrane to these ranges, the filtration separation of a filtrate from a biological treatment liquid can be facilitated.

The biological treatment liquid inside a filtration tank 6 is stirred while aerating by, for example, a diffusion-type aeration. By the stirring mentioned above, inorganic particles contained in the biological treatment liquid are allowed to circulate inside a filtration tank 6. Further, organic substances contained in the biological treatment liquid are even more biologically treated by actions of microbes in the activated sludge. Aeration 8 is carried out, for instance, from a lower side of a filter material 7.

The amount of aeration in a filtration tank 6 is, for example, preferably from 5 to 10 m³/hr, and more preferably from 6 to 8 m³/hr, per bottom area (m²) of the filtration tank. By setting the amount of aeration in a filtration tank 6 to these ranges, the surface of a filter material 7 can be cleaned by aerating the surface from a lower side of the filter material 7, and an appropriate biological treatment state in the filtration tank 6 can be maintained.

The lower limit of the MLSS in the biological treatment liquid in a filtration tank 6 is 35,000 mg/L, and preferably 40,000 mg/L. In addition, the upper limit of the MLSS in the biological treatment liquid is 130,000 mg/L, and preferably 120,000 mg/L. The lower limit of the MLSS in the biological treatment liquid is 35,000 mg/L, from the viewpoint of sufficiently obtaining a proportion of microbes derived from the activated sludge in the biological treatment liquid, thereby improving the efficiency of treating an organic substance-containing liquid. The upper limit of the MLSS in the biological treatment liquid is 130,000 mg/L, from the viewpoint of preventing the biological treatment liquid from having an exceedingly high proportion of the activated sludge to cause clogging in a filter material 7. In other words, by setting the lower limit and the upper limit of the MLSS to the above values, treatment efficiency of the biological treatment liquid can be increased, and a high treatment efficiency can be maintained.

A method of maintaining the lower limit and the upper limit of the MLSS to the above values include, for example, a method including the step of returning an activated sludge to an aeration tank as occasion demands, a method including the step of drawing out an activated sludge to a sludge reservoir separately provided, and a method including the step of newly adding an activated sludge thereto.

The lower limit of MLVSS/MLSS of the biological treatment liquid in a filtration tank 6 is preferably 0.2, and more preferably 0.25. In addition, the upper limit of the MLVSS/MLSS is preferably 0.5, and more preferably 0.4. The lower limit of the MLVSS/MLSS is preferably 0.2, from the viewpoint of sufficiently obtaining a proportion of microbes derived from an activated sludge in the biological treatment liquid, thereby improving the efficiency of treating the biological treatment liquid. The upper limit of the MLVSS/MLSS in the biological treatment liquid is preferably 0.5, from the viewpoint of sufficiently obtaining a proportion of inorganic particles in the biological treatment liquid, thereby maintaining the properties of a filter material. In other words, by setting the lower limit and the upper limit of the MLVSS/MLSS to the above values, treatment efficiency of the biological treatment liquid can be effectively increased, and a high treatment efficiency can be maintained.

As to other various parameters in the biological treatment liquid inside a filtration tank 6, specifically, a pH at 25°C, a temperature, an oxidation-reduction potential, an amount of dissolved oxygen, and viscosity, preferred ranges and preferred reasons are the same as those for the aeration tank 5.

The biological treatment liquid inside a filtration tank 6 contains inorganic particles. Therefore, the biological treatment liquid would be containing inorganic particles at least immediately before the filtration separation. The inorganic particles may be those originated from inorganic ions contained in the biological treatment liquid, or the inorganic particles may be added to the biological treatment liquid from the outside of the system.

With the progress of the filtration separation of a biological treatment liquid, there is a risk that an activated sludge is accumulated on the surface of a filter material 7 to cause clogging, thereby lowering the filtration properties of the filter material 7. In the present invention, the accumulated activated sludge is scraped off from the surface of a filter material 7 by aerating the surface from a lower side of a filter material 7. Further, in the present invention, since the biological treatment liquid inside a filtration tank 6 contains the inorganic particles, a high treatment efficiency of the organic substance-containing liquid ascribed to high MLSS can be maintained. The reasons why such properties are exhibited are deduced to be as follows. In other words, the inorganic particles contained in the biological treatment liquid are circulated in a filtration tank 6 housing the treatment liquid by aeration of the biological treatment liquid. The inorganic particles which are circulated as described above are collided against excessively accumulated sludge on the surface of a filter material 7, so that the sludge is scraped off from the surface of a filter material 7. As a result, excess deposition of the activated sludge on the surface of a filter material 7 is suppressed. Therefore, the filtration properties of a filter material 7 are maintained, so that a high treatment efficiency of an organic substance-containing liquid ascribed to a high MLSS can be maintained over a long period of time (for example, from 6 to 12 months) without cleaning or exchanging the filter material 7. Accordingly, the volume of an aeration tank 5 and a filtration tank 6 can be made smaller, thereby making it possible to miniaturize the entire treatment apparatus for an organic substance-containing liquid.

The shape of the inorganic particles is preferably acicular. In this case, sludge accumulated on the surface of a filter material 7 can be effectively scraped off. The shape of the inorganic particles as being acicular will be defined as follows. Specifically, acicular inorganic particles refer to particles, for example, of which shape is observed to extend along one direction, such as a conical shape, a rod shape, or the like, with sharp tip end, when a biological treatment liquid is observed with a differential interference contrast microscope. In addition, the formed inorganic particles may be an aggregate composed of plural particles.

The particle size of the solid content of the biological treatment liquid in a filtration tank 6 is not particularly limited, and for example, a median size on number basis is preferably from 0.3 to 4.0 µm. Further, a median size on volume basis for the particle size is preferably from 15 to 60 µm. It is preferable that a median size of the solid content is 0.3 µm or more on number basis, or 15 µm or more on volume basis, from the viewpoint of effectively scraping off the activated sludge originated from the inorganic particles, which is one kind of the solid content. The median size of the solid content of the biological treatment liquid is 4.0 µm or less on number basis, or 60 µm or less on volume basis, from the viewpoint of sufficiently stirring the inorganic particles by aeration. In other words, by setting the median size of the solid content of the biological treatment liquid to the above range, filtration properties of a filter material can be maintained, so that a high treatment efficiency of the biological treatment liquid can be easily maintained. In the present invention, the measurement of the particle size of the solid content of the biological treatment liquid is carried out by preparing a sample by diluting a biological treatment liquid collected from a tank with ion-exchanged water, and measuring the particle size distribution of the sample utilizing the laser diffraction method.

A 10% particle size of the solid content of the biological treatment liquid in a filtration tank 6 is, on a number basis, of preferably from 0.1 to 2.5 µm, and, on a volume basis, of preferably from 5.0 to 15 µm. In addition, a 90% particle size of the solid content is, on a number basis, of preferably from 0.5 to 15 µm, and, on a volume basis, of preferably from, 50 to 230 µm. By setting each of the particle sizes of the solid content to the above range, filtration properties can be effectively maintained. The 10% particle size and the 90% particle size can be obtained in the same manner as that of the measurement of the particle size of the solid content mentioned above.

Upon the treatment of an organic substance-containing liquid, an activated sludge in a filtration tank 6 is returned into an aeration tank 5 as occasion demands. During the treatment, inorganic particles are also returned together with the activated sludge. Therefore, the preferred range regarding the inorganic particles and the solid content of the biological treatment liquid in a filtration tank 6 may be applied to the inorganic particles and the solid content of the biological treatment liquid in an aeration tank 5.

When the filtration separation of the biological treatment liquid is carried out over a long period of time, inorganic particles and an activated sludge are adhered to the surface of a filter material 7. In this case, it is deduced that an activated sludge is adhered to the surface of a filter material 7, and inorganic particles are adhered to the activated sludge. When inorganic particles and an activated sludge are adhered to the surface of a filter material 7, it is preferable that a filter material 7 is taken out of a filtration tank 6, and for example, the inorganic particles and the activated sludge are removed from the surface of the filter material 7 by washing the filter material 7 with water. Upon washing the filter material 7 with water, the inorganic particles on the activated sludge are removed, scraping off the activated sludge adhered to the surface of the filter material 7. Therefore, the inorganic particles and the activated sludge are efficiently removed from the surface of the filter material 7. After washing the filter material 7 with water, the filter material 7 is immersed in, for example, hydrochloric acid, in order to further wash the surface of the filter material 7. The filter material 7 after washing is immersed again in a biological treatment liquid.

The filtrate treated according to the present invention is at a water quality which is suitable for releasing in sewage, public water region, or the like. The phrase "water quality suitable for releasing in sewage, public water bodies or the like" includes, but may differ in standards depending upon the local districts or the like, a water quality satisfying the conditions for sewage release standard in Ogaki-shi, Gifu-ken, Japan in the year 2005 [pH: 5.0 to 9.0, BOD: (river release BOD + 2 × amount of suspension solids): 600 mg/L or less, total nitrogen content (T-N): 240 mg/L or less, total phosphorus content (T-P): 32 mg/L or less], and the like.

### EXAMPLES

The present invention will be described more specifically hereinbelow by means of Examples and Comparative Examples.

### Example 1

A treatment of an organic substance-containing liquid was carried out using a treatment apparatus with a treatment flow as shown in Figure 2. Here, an aeration tank 5 in Example 1 consisted of two tanks. In Example 1, an organic substance-containing liquid containing metal ions and an organic substance-containing liquid not containing metal ions, discharged from plating factories and printed circuit board factories, were used. Specifically, a degreasing agent-containing liquid (1) containing copper ions and a degreasing agent-containing liquid (1') not containing copper ions were used.

A degreasing agent-containing liquid (1) containing copper ions was treated in the following manner. Specifically, a degreasing agent-containing liquid (1) was introduced into a metal removal tank 1. In a metal removal tank 1, copper ions were removed from a degreasing agent-containing liquid (1), utilizing a neutralization reaction using an aqueous sodium hydroxide solution, calcium hydroxide, a diluted sulfuric acid, and a polymer aggregating agent (anionic polymer aggregating agent), and a chelating reaction using a chelating agent. A degreasing agent-containing liquid (1') after the removal of the copper ions was introduced into a pH adjustment tank 3.

In addition, a degreasing agent-containing liquid (1') not containing copper ions was treated in the following manner. Specifically, a degreasing agent-containing liquid (1') was introduced into a reservoir 2, and thereafter a degreasing agent-containing liquid (2') in the reservoir 2 was introduced into a pH adjustment tank 3.

In the pH adjustment tank 3, the mixing of each of the degreasing agent-containing liquids (2), (2') was carried out, and thereafter a pH of the degreasing agent-containing liquid was adjusted with an aqueous sodium hydroxide solution and a diluted sulfuric acid to a range of from 6.2 to 8.0. Next, the degreasing agent-containing liquid after the pH adjustment was introduced into a relay tank 4.

A degreasing agent-containing liquid (3) in the relay tank 4 was introduced to a first aeration tank at a rate of from 133 to 204 m³/day, and a degreasing agent-containing liquid (4) in a first aeration tank was introduced into a second aeration tank. A total volume of each of the aeration tanks was 300 m³. A biological treatment liquid in each of the aeration tanks was aerated with the air while stirring, and the amount of aeration of the first aeration tank and the second aeration tank were adjusted to 200 m³/hr or less each.

A biological treatment liquid (4') aerated in a second aeration tank was introduced into a filtration tank 6 (volume: 150 m³) to carry out aeration of a biological treatment liquid (5) in the filtration tank 6. An amount of aeration of the filtration tank 6 was set at 200 m³/hr or less. During the treatment, an activated sludge was returned to each of the aeration tanks from the filtration tank 6.

A filtrate (6) was aspirated from a unit of plural immersion membranes (average pore size: 0.08 µm) provided in a filtration tank 6 as a filter material 7. A pH of the filtrate obtained was adjusted to from 7.6 to 8.6 with an aqueous sodium hydroxide solution and a diluted sulfuric acid, and thereafter the filtrate was discharged therefrom.

Water qualities and properties of each of the degreasing agent-containing liquids, the biological treatment liquids, and the filtrate mentioned above are shown in Table 1. In each of the following tables, the values for the row of "TOC" show a total organic carbon, the values for the row of "COD" show a chemical oxygen demand, and the values for the row of "Cu" show a content of copper ions. Also, the values for the row of "T-N" show a total nitrogen content, and the values for the row of "T-P" show a total phosphorus content, and the values for the row of "SS" show a suspension solids content, and the values for the row of "SV30" show an activated sludge settling rate. These measurements were carried out in accordance with conventional methods. The values for the row of "viscosity" show values when measured at 25°C with a TVC-5 model viscometer manufactured by TOKI SANGYO CO., LTD., and the values for the row of "pH" show values when measured at 25°C.

In Table 1, the values for each of the rows of MLSS, MLVSS and MLSS/MLVSS show the upper limit, the lower limit, and an average during a period of about 5 months, and values on each of the rows other than these items show an average during a period of about 5 months.

[Table 1]

**Table 1**

| | | Degreasing Agent-Containing Liquid(1) | Degreasing Agent-Containing Liquid(2) | Degreasing Agent-Containing Liquid(1') | Degreasing Agent-Containing Liquid(2') | Degreasing Agent-Containing Liquid(3) | Biological Treatment Liquid(4) | Biological Treatment Liquid(4') | Biological Treatment Liquid(5) | Filtrate(6) |
|---|---|---|---|---|---|---|---|---|---|---|
| pH | | 2.7 | 5.6 | 12.8 | 8.1 | 7.3 | 8.3 | 8.3 | 8.4 | 8.4 |
| TOC(mg/L) | | 3,992 | 3,746 | 667 | 275 | 1,950 | 124 | 128 | 115 | 57 |
| BOD(mg/L) | | - | 4,320 | 246 | 353 | 3,896 | 127 | 129 | 69 | 8.0 |
| COD(mg/L) | | 3,103 | 2,840 | 630 | 400 | 1,709 | 278 | 298 | 229 | 105 |
| Cu(mg/L) | | 765 | 1.0 | - | - | 0.3 | 0.6 | 0.6 | 0.7 | 0.9 |
| Temperature(°C) | | - | - | - | - | - | 35.0 | 35.5 | 34.8 | - |
| T-N(mg/L) | | - | - | - | - | 571 | 307 | 325 | 268 | - |
| T-P(mg/L) | | - | - | - | - | 76 | 34 | 35 | 33 | 31 |
| SS(mg/L) | | - | - | - | - | 345 | - | - | - | - |
| Viscosity(mPa•s) | | - | - | - | - | - | 86 | 80 | 155 | - |
| MLSS(mg/L) | Upper Limit | - | - | - | - | - | 97,000 | 110,000 | 120,000 | - |
| | lower | - | - | - | - | - | 56,000 | 47,000 | 55,000 | - |
| | | Ave. | - | - | - | - | 78,407 | 76,489 | 92,452 | - |
| MLVSS(mg/L) | Upper Limit | - | - | - | - | - | 35,000 | 34,000 | 39,000 | - |
| | Lowed Limit | - | - | - | - | - | 17,000 | 16,000 | 17,000 | - |
| | Ave. | - | - | - | - | - | 25,963 | 25,141 | 30,163 | - |
| MLVSS/MLSS | Limit | - | Upper | - | - | - | 0.38 | 0.37 | 0.39 | - |
| | Lowed Limit | - | - | - | - | - | 0.26 | 0.26 | 0.27 | - |
| | Ave. | - | - | - | - | - | 0.33 | 0.33 | 0.33 | |
| SV30(%) | | - | - | - | - | - | 94 | 94 | 96 | - |
| ORP(mV) | | - | - | - | - | - | 42 | 49 | 52 | - |
| DO(mg/L) | | - | - | - | - | | 5.0 | 2.0 | 4.1 | - |

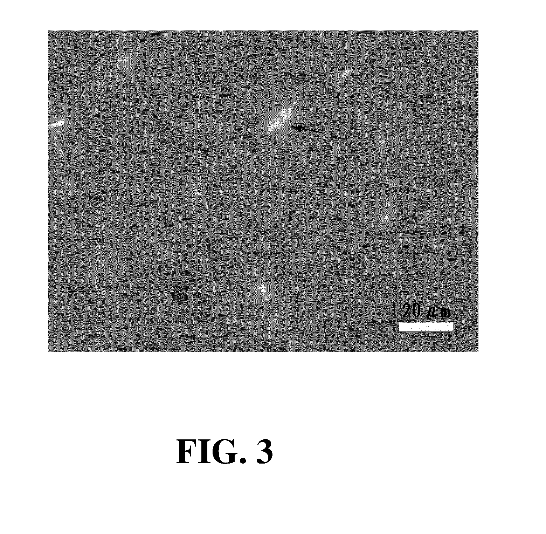

A biological treatment liquid (5) was observed with a differential interference contrast microscope (manufactured by Olympus Corporation, AX80). As a result, acicular inorganic particles were confirmed (arrow in Figure 3).

A biological treatment liquid (5) was subjected to X-ray diffraction analysis. Specifically, a collected biological treatment liquid (5) was air-dried, and the measurement was then made using an X-ray diffractometer RINT-TTRIII manufactured by Rigaku. As a result, calcium carbonate (calcite) and a hydrate of calcium carbonate were detected.

The particle size distribution of the solid content of a biological treatment liquid (5) was measured according to a laser diffraction method using a particle size distribution analyzer SALD-2000J manufactured by Shimadzu Corporation. As a result, on a volume basis, a 10% size was 11.9 µm, a median size (50% size) was 36.3 µm, and a 90% size was 85.5 µm. In addition, on a number basis, a 10% size was 2.12 µm, a median size (50% size) was 3.66 µm, and a 90% size was 9.73 µm.

A biological treatment liquid (5) was subjected to an SEM observation and elemental analysis. Specifically, a collected biological treatment liquid (5) was subjected to a centrifugal treatment, and precipitates obtained were embedded in an epoxy resin. Thereafter, a cross section of an embedded material was polished, and the cross section was then observed and analyzed by using a scanning electron microscope JSM-6480LA and energy dispersion-type X-ray diffractometer JED-2300, manufactured by JEOL. As a result, in plural analyzed regions, C, O, and Ca were mainly detected.

The deposition on the surface of an immersion membrane was subjected to an SEM observation and elemental analysis. Specifically, the deposition on the surface of an immersion membrane was collected, and subjected to an SEM observation using a scanning electron microscope and elemental analysis using EPMA. As a result, Ca was not detected on the surface of an immersion membrane in the deposition on the immersion membrane, and Ca was detected at sites that were distanced from the surface of the immersion membrane. Further, with an increased distance from the surface of the immersion membrane, the existing ratio of Ca increased. From the above, it was deduced that an activated sludge was accumulated on the surface of an immersion membrane, and that calcium carbonate particles were accumulated on the sludge. An immersion membrane was washed by hitting with a water stream the surface of the immersion membrane to which a deposition was formed; as a result, the deposition could be easily removed from the surface of the immersion membrane.

A filtrate (6) was at a water quality suitable to be released to sewage. Further, it was seen that even when the MLSS had a high value as shown in Table 1, a biological treatment of an organic substance-containing liquid can be maintained over a long period of time of about 5 months.

### Example 2

A treatment of an organic substance-containing liquid was carried out using a treatment apparatus with a treatment flow as shown in Figure 2. Here, an aeration tank 5 in Example 2 consisted of six tanks. In Example 2, an organic substance-containing liquid containing metal ions and an organic substance-containing liquid not containing metal ions, discharged from plating factories and printed circuit board factories, were used. Specifically, a degreasing agent-containing liquid containing copper ions and a degreasing agent-containing liquid not containing copper ions were used.

A degreasing agent-containing liquid containing copper ions was treated in the following manner. Specifically, a degreasing agent-containing liquid was introduced into a metal removal tank 1. In a metal removal tank 1, copper ions were removed from a degreasing agent-containing liquid, with an anionic polymer aggregating agent, a diluted sulfuric acid, and a sulfidation treatment using sodium hydrogensulfide. A degreasing agent-containing liquid after the removal of the copper ions was introduced into a pH adjustment tank 3. In the sulfidation treatment, a pH of a degreasing agent-containing liquid was adjusted to a range of from 9.0 to 9.5 with an aqueous sodium hydroxide solution and calcium hydroxide before the addition of sodium hydrogensulfide. Further, a copper ion concentration in the degreasing agent-containing liquid was measured, sodium hydrogensulfide of an amount necessary for the removal of the copper ions was calculated, and thereafter sodium hydrogensulfide in an amount 1.1 times the necessary amount was added thereto. The sulfidation treatment was carried out over 30 minutes to 1 hour. Further, after the sulfidation reaction with an excess sodium hydrogensulfide, polyferric sulfate was used for removal the remaining sulfur.

In addition, a degreasing agent-containing liquid not containing copper ions was treated in the following manner. Specifically, a degreasing agent-containing liquid was introduced into a reservoir 2, and thereafter a degreasing agent-containing liquid in the reservoir 2 was introduced into a pH adjustment tank 3.

In the pH adjustment tank 3, the mixing of each of the degreasing agent-containing liquids was carried out, and thereafter a pH of the degreasing agent-containing liquid was adjusted with a diluted sulfuric acid to a range of from 6.8 to 8.2. Next, the degreasing agent-containing liquid after the pH adjustment was introduced into a relay tank 4.

A degreasing agent-containing liquid (3) in the relay tank 4 was introduced to a first aeration tank at a rate of from 240 to 290 m³/day, and a biological treatment liquid (4) in a first aeration tank was sequentially introduced into a next aeration tank, in such a manner that the liquid in a first aeration tank was introduced into a second aeration tank, and the liquid in the second aeration tank into a third aeration tank. A total volume of each of the aeration tanks was 531 m³. A biological treatment liquid in each of the aeration tanks was aerated with the air while stirring.

A biological treatment liquid aerated in a sixth aeration tank was introduced into a filtration tank 6 (volume: 98 m³) to carry out aeration of a biological treatment liquid (5) in the filtration tank 6. During the treatment, an activated sludge was returned to each of the aeration tanks from the filtration tank 6.

A filtrate (6) was aspirated from a unit of plural immersion membranes (average pore size: 0.08 µm) provided in a filtration tank 6 as a filter material 7. A pH of the filtrate obtained was adjusted to from 7.6 to 8.7 with a diluted sulfuric acid, and thereafter the filtrate was discharged therefrom.

Water qualities and properties of each of the degreasing agent-containing liquid, the biological treatment liquids, and the filtrate mentioned above are shown in Table 2. In Table 2, the values for each of the rows of MLSS, MLVSS and MLSS/MLVSS show the upper limit, the lower limit, and an average during a period of about 1 month, and values on row sage during a period of about 1 month.

[Table 2]

**Table 2**

| | | Degreasing Agent-Containing Liquid(3) | Biological Treatment Liquid(4) Liquid(5) | Biological Treatment | Filtrate(6) |
|---|---|---|---|---|---|
| pH | | 7.5 | 8.1 | 8.2 | 7.5 |
| TOC(mg/L) | | 1,186 | - | 75 | 62 |
| BOD(mg/L) | | 753 | - | - | 7 |
| COD(mg/L) | | 613 | - | - | 140 |
| Cu(mg/L) | | 0.4 | 0.9 | 1.0 | 0.4 |
| Temperature(°C) | | 22.0 | 26.7 | 27.6 | - |
| T-N(mg/L) | | 510 | - | - | - |
| T-P(mg/L) | | 9 | - | - | - |
| SS(mg/L) | | 86 | - | - | 51 |
| Viscosity(mPa•s) | | - | 29 | 138 | - |
| MLSS(mg/L) | Upper Limit | - | - | 65,000 | - |
| | Lower Limit | - | - | 43,000 | - |
| | Ave. | - | - | 54,333 | - |
| MLVSS(mg/L) | Upper Limit | - | - | 21,000 | - |
| | Lower Limit | - | - | 14,000 | - |
| | Ave. | - | - | 17,333 | - |
| MLVSS/MLSS | Upper Limit | - | - | 0.33 | - |
| | Lower Limit | - | - | 0.31 | - |
| | Ave. | - | - | 0.32 | - |
| SV30(%) | | - | 95 | 99 | - |
| ORP(mV) | | -38 | -43 | -17 | - |
| DO(mg/L) | | - | 2.7 | 5.6 | - |

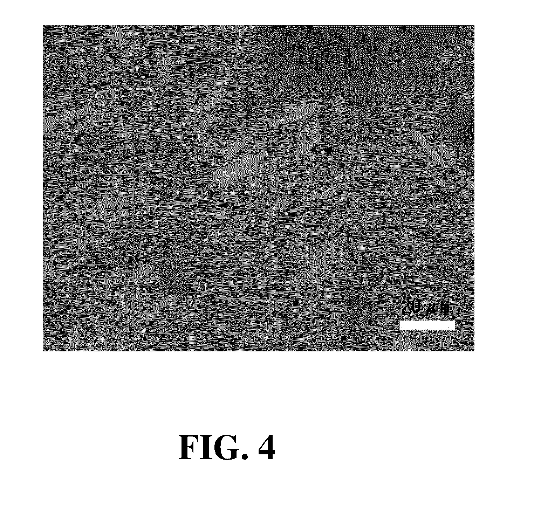

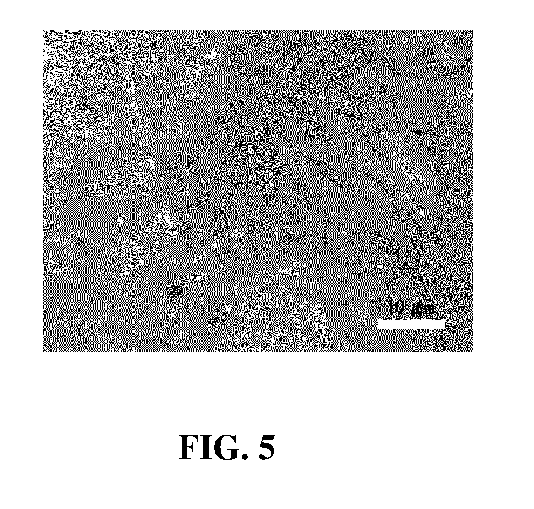

A biological treatment liquid (5), and precipitates accumulated at bottom of a filtration tank 6 were observed using a differential interference contrast microscope in the same manner as in Example 1. The observation results for the biological treatment liquid (5) are shown in Figure 4, and the observation results for the precipitates are shown in Figure 5. As a result, acicular inorganic particles were confirmed in both the biological treatment liquid (5) and the precipitates (arrow in Figure 4 and Figure 5).

The biological treatment liquid (5) and the precipitates were subjected to an X-ray diffraction analysis in the same manner as in Example 1. As a result, in both the biological treatment liquid (5) and the precipitates, calcium carbonate (calcite, aragonite) and sodium sulfate were detected.

The particle size distribution of the solid content of the biological treatment liquid (5) and the precipitates was measured in the same manner as in Example 1. As a result, in the biological treatment liquid (5), on a volume basis, a 10% size was 11.3 µm, a median size (50% size) was 29.2 µm, and a 90% size was 66.9 µm. In addition, on a number basis, a 10% size was 1.59 µm, a median size (50% size) was 3.25 µm, and a 90% size was 10.3 µm. On the other hand, in the precipitates, on a volume basis, a 10% size was 13.9 µm, a median size (50% size) was 55.1 µm, and a 90% size was 222 µm. In addition, on a number basis, a 10% size was 0.27 µm, a median size (50% size) was 0.34 µm, and a 90% size was 0.79 µm.

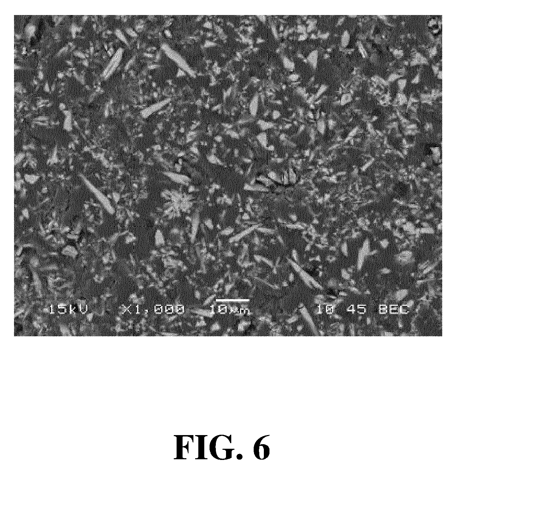

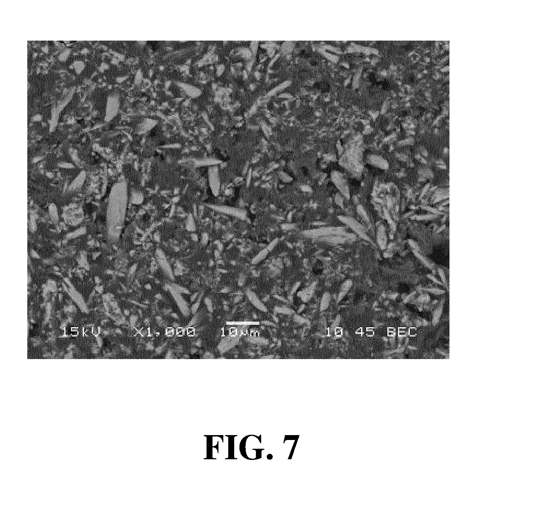

The biological treatment liquid (5) and the precipitates were subjected to an SEM observation and elemental analysis in the same manner as in Example 1. Regarding the biological treatment liquid (5), the results for the SEM observations in the regions that are different from each other are shown in Figures 6 and 7, respectively. As a result of the SEM observations, in the biological treatment liquid (5), acicular particles were confirmed. Also, regarding both the biological treatment liquid (5) and the precipitates, C, O, and Ca were mainly detected in plural analyzed regions.

A volatile component in the liquid was analyzed according to a static head space/gas chromatography/mass spectroscopy method. As a result, alcohols (methanol, ethanol, 1-butanol, ethylene glycol monobutyl ether (butyl cellosolve), diethylene glycol monobutyl ether (butyl carbitol), and acetone were detected from a degreasing agent-containing liquid (3), but these compounds were not detected from the filtrate.

A non-volatile component in the liquid was anal yzed according to chloroform extraction and FT-IR. As a result, toluenesulfonamide (or a derived component thereof), an amide component, a melamine component, and an aliphatic component (polyoxyalkylene glycol) were detected from a degrease agent-containing liquid (3). In addition, although an amide component, a melamine component, and a polyoxyalkylene glycol were detected from the filtrate, toluenesulfonamide (or a derived component thereof) was not detected therefrom. As a result of quantification of the non-volatile component of the degreasing agent-containing liquid (3) and the non-volatile component of the filtrate, it was seen that the filtrate had a smaller amount of the non-volatile component.

The amount of SO₄²⁻ in the liquid was measured according to ion chromatography method. As a result, 14000 µg/mL of SO₄²⁻ was detected from the degreasing agent-containing liquid (3), and 10000 µg/mL of SO₄²⁻was detected from the filtrate.

A metal component in the liquid was analyzed according to ICP-MS. As a result, B, Na, Mg, Al, K, Ca, Mn, Ni, Cu, Se, and Sr were detected from the degreasing agent-containing liquid (3). Also, although B, Na, Mg, K, Ca, Ni, Cu, and Sr were detected from the filtrate, Al, Mn, and Se were not detected therefrom.

A filtrate (6) was at a water quality suitable to be released to sewage. Further, it was seen that even when the MLSS had a high value as shown in Table 2, a biological treatment of an organic substance-containing liquid can be maintained over a long period of time of about 1 month.

### Example 3

A treatment of an organic substance-containing liquid was carried out using a treatment apparatus with a treatment flow as shown in Figure 2. Here, in Example 3, a pH adjustment tank 3 and a relay tank 4 were positioned in a reverse order, and an aeration tank 5 consisted of four tanks. In Example 3, an organic substance-containing liquid containing metal ions and an organic substance-containing liquid not containing metal ions, discharged from plating factories and printed circuit board factories, were used. Specifically, a degreasing agent-containing liquid containing copper ions and a degreasing agent-containing liquid not containing copper ions were used.

A degreasing agent-containing liquid containing copper ions was treated in the following manner. Specifically, a degreasing agent-containing liquid was introduced into a metal removal tank 1. In a metal removal tank 1, copper ions were removed from a degreasing agent-containing liquid, utilizing a neutralization reaction using an aqueous sodium hydroxide solution, calcium hydroxide, and a diluted hydrochloric acid, and a chelating reaction using a chelating agent, calcium hydroxide, and a diluted hydrochloric acid. A degreasing agent-containing liquid after the removal of the copper ions was introduced into a relay tank 4.

In addition, a degreasing agent-containing liquid not containing copper ions was treated in the following manner. Specifically, a degreasing agent-containing liquid was introduced into a reservoir 2, and thereafter a degreasing agent-containing liquid in the reservoir 2 was introduced into a relay tank 4.

In the relay tank 4, the mixing of each of the degreasing agent-containing liquids was carried out, and thereafter the degreasing agent-containing liquid in the relay tank 4 was introduced into a pH adjustment tank 3. In the pH adjustment tank 3, a pH of the degreasing agent-containing liquid (3) was adjusted with an aqueous sodium hydroxide solution and a diluted sulfuric acid.

A degreasing agent-containing liquid (3) in the pH adjustment tank 3 was introduced to a first aeration tank, and a biological treatment liquid (4) in a first aeration tank was sequentially introduced into a next aeration tank, in such a manner that the liquid in a first aeration tank was introduced into a second aeration tank, and the liquid in the second aeration tank into a third aeration tank. A total volume of each of the aeration tanks was 1353 m³. A biological treatment liquid in each of the aeration tanks was aerated with the air while stirring.

A biological treatment liquid aerated in a fourth aeration tank was introduced into a filtration tank 6 (volume: 370 m³) to carry out aeration of a biological treatment liquid (5) in the filtration tank 6. During the treatment, an activated sludge was returned to each of the aeration tanks from the filtration tank 6.

A filtrate (6) was aspirated from a unit of plural immersion membranes (average pore size: 0.08 µm) provided in a filtration tank 6 as a filter material 7. A pH of the filtrate obtained was adjusted with a diluted sulfuric acid and an aqueous sodium hydroxide solution, and the filtrate was discharged therefrom.

Water qualities and properties of each of the degreasing agent-containing liquid, the biological treatment liquids, and the filtrate mentioned above are shown in Table 3. In Table 3, the values for each of the rows of MLSS, MLVSS and MLSS/MLVSS show the upper limit, the lower limit, and an average during a period of about 1 month, and values on each of the rows other than these items show an average during a period of about 1 month.

[Table 3]

**Table 3**

| | | Degreasing Agent-Containing Liquid(3) | Biological Treatment Liquid(4) | Biological Treatment Liquid(5) | Filtrate(6) |
|---|---|---|---|---|---|
| pH | | 7.6 | 7.7 | 7.8 | 7.8 |
| TOC(mg/L) | | 506 | 32 | 15 | 15 |
| BOD(mg/L) | | 1,250 | - | - | 2 |
| COD(mg/L) | | 957 | - | - | 29 |
| Cu(mg/L) | | 0.6 | 0.7 | 0.7 | 0.8 |
| Temperature(°C) | | 16.6 | 18.5 | 18.1 | - |
| T-N(mg/L) | | 155 | - | - | 87 |
| T-P(mg/L) | | 1 | - | - | 1 |
| SS(mg/L) | | 277 | - | - | 94 |
| Viscosity(mPa•s) | | - | 105 | 162 | - |
| MLSS(mg/L) | Upper Limit | - | 60,000 | 67,000 | - |
| | Lower limit | - | 53,000 | 63,000 | - |
| | Ave. | - | 56,333 | 64,333 | - |
| MLVSS(mg/L) | Upper limit | - | 21,000 | 23,000 | - |
| | Lower limit | - | 19,000 | 21,000 | - |
| | Ave. | - | 19,667 | 21,667 | - |
| MLVSS/MLSS | Upper Limit | - | 0.36 | 0.34 | - |
| | Lower Limit | - | 0.34 | 0.33 | - |
| | Ave. | - | 0.35 | 0.34 | - |
| SV30(%) | | - | 99 | 100 | - |
| ORP(mV) | | 46 | 46 | 33 | - |
| DO(mg/L) | | - | 6.6 | 7.8 | - |

A filtrate was at a water quality suitable to be released to sewage. Further, it was seen that even when the MLSS had a high value as shown in Table 3, a biological treatment of an organic substance-containing liquid can be maintained over a long period of time of about 1 month.

### Example 4

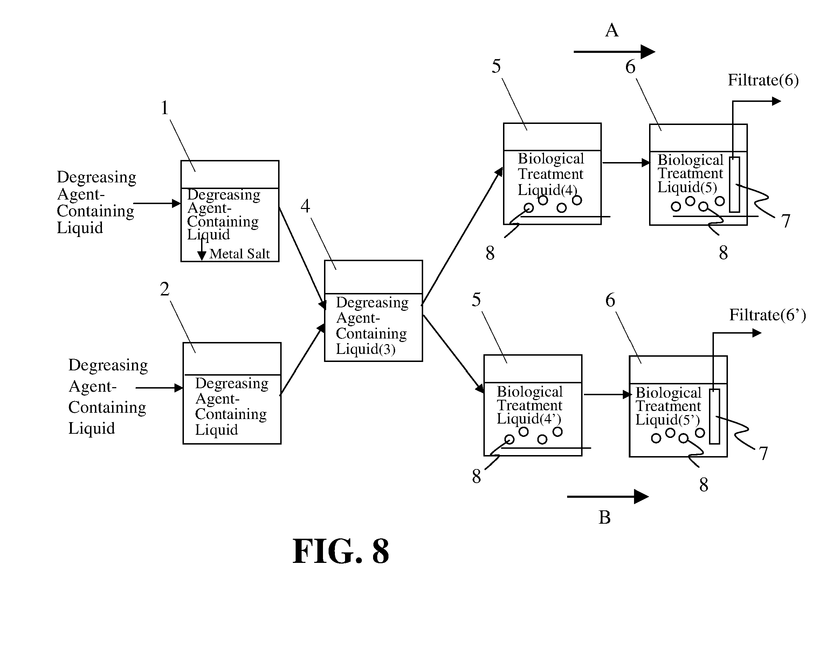

A treatment of an organic substance-containing liquid was carried out using a treatment apparatus with a treatment flow as shown in Figure 8. Here, in Example 4, a pH adjustment tank was omitted, and treatments in an aeration tank 5 and a filtration tank 6 were carried out in two patterns of treatment flows (Treatment Flow A and Treatment Flow B). An aeration tank 5 in Treatment Flow A consisted of eight tanks, and an aeration tank 5 in Treatment Flow B consisted of three tanks.

In Example 4, an organic substance-containing liquid containing metal ions and an organic substance-containing liquid not containing metal ions, discharged from plating factories and printed circuit board factories, were used. Specifically, a degreasing agent-containing liquid containing copper ions and a degreasing agent-containing liquid not containing copper ions were used.

A degreasing agent-containing liquid containing copper ions was treated in the following manner. Specifically, a degreasing agent-containing liquid was introduced into a metal removal tank 1. In a metal removal tank 1, copper ions were removed from a degreasing agent-containing liquid, utilizing a neutralization reaction using an aqueous sodium hydroxide solution, calcium hydroxide, a diluted hydrochloric acid, and an anionic polymer aggregating agent, and a chelating reaction using a chelating agent, calcium hydroxide, and a diluted hydrochloric acid. A degreasing agent-containing liquid after the removal of the copper ions was introduced into a relay tank 4.

In addition, a degreasing agent-containing liquid not containing copper ions was treated in the following manner. Specifically, a degreasing agent-containing liquid was introduced into a reservoir 2, and thereafter a degreasing agent-containing liquid in the reservoir 2 was introduced into a relay tank 4.

In the relay tank 4, the mixing of each of the degreasing agent-containing liquids was carried out, and thereafter a pH of the degreasing agent-containing liquid (3) in the relay tank 4 was adjusted with an aqueous sodium hydroxide solution and a diluted hydrochloric acid. Next, the degreasing agent-containing liquid (3) was introduced into an aeration tank 5 so that the degreasing agent-containing liquid was treated according to either one of Treatment Flow A or Treatment Flow B.

In Treatment Flow A, a degreasing agent-containing liquid (3) was introduced from a relay tank 4 to a first aeration tank, and a biological treatment liquid (4) in a first aeration tank was sequentially introduced into a next aeration tank, in such a manner that the liquid in a first aeration tank was introduced into a second aeration tank, and the liquid in the second aeration tank into a third aeration tank. A total volume of each of the aeration tanks was 185 m³. A biological treatment liquid in each of the aeration tanks was aerated with the air while stirring. A biological treatment liquid aerated in an eighth aeration tank was introduced into a filtration tank 6 (volume: 30 m³) to carry out aeration of a biological treatment liquid (5) in the filtration tank 6.

In Treatment Flow B, a degreasing agent-containing liquid (3) was introduced from a relay tank 4 to a first aeration tank, and a biological treatment liquid (4') in a first aeration tank was sequentially introduced into a next aeration tank, in such a manner that the liquid in a first aeration tank was introduced into a second aeration tank, and the liquid in the second aeration tank into a third aeration tank. A total volume of each of the aeration tanks was 100 m³. A biological treatment liquid in each of the aeration tanks was aerated with the air while stirring. A biological treatment liquid aerated in a third aeration tank was introduced into a filtration tank 6 (volume: 40 m³) to carry out aeration of a biological treatment liquid (5') in the filtration tank 6.

Each of a filtrate (6) of Treatment Flow A and a filtrate (6') of Treatment Flow B was aspirated from a unit of plural immersion membranes (average pore size: 0.08 µm) provided in a filtration tank 6 for each of the treatment flows as a filter material 7, and these filtrates were collected together in one tank. A pH of the filtrate in the tank was adjusted to a range of from 7.0 to 8.2 with an aqueous sodium hydroxide solution and a diluted hydrochloric acid, and the filtrate was discharged therefrom.

Water qualities and properties of each of the degreasing agent-containing liquid, the biological treatment liquids, and the filtrates mentioned above are shown in Table 4. In Table 4, the values for each of the rows of MLSS, MLVSS and MLSS/MLVSS show the upper limit, the lower limit, and an average during a period of about 1 month, and values on each of the rows other than these items show an average during a period of about 1 month.

[Table 4]

**Table 4**

| | | Degreasing Agent-Containing Liquid(3) | Biological Treatment Liquid(4) | Biological Treatment Liquid(5) | Filtrate(6) | Biological Treatment Liquid(4') | Biological Treatment Liquid(5') | Filtrate(6') |
|---|---|---|---|---|---|---|---|---|
| pH | | 7.1 | 7.7 | 7.8 | - | 7.7 | 7.9 | - |
| TOC(mg/L) | | 1,235 | - | - | 40 | - | - | 60 |
| BOD(mg/L) | | 820 | - | 99 | - | - | 260 | - |
| COD(mg/L) | | 315 | - | - | 57 | - | - | 63 |
| Cu(mg/L) | | 0.7 | - | - | 1.8 | - | - | 2.2 |
| Temperature(°C) | | 9.5 | 13.6 | 19.1 | - | 19.5 | 19.9 | - |
| T-N(mg/L) | | 14 | - | 130 | - | - | 170 | - |
| T-P(mg/L) | | 0 | - | 19 | - | - | 19 | - |
| Viscosity(mPa•s) | | - | - | 150 | - | - | 140 | - |
| MLSS(mg/L) | Upper Limit | - | - | 75,000 | - | - | 73,000 | - |
| | Lower Limit | - | - | 68,000 | - | - | 67,000 | - |
| | Ave. | - | - | 72,000 | - | - | 70,600 | - |
| MLVSS(mg/L) | Limit | Upper | - | 23,000 | - | - | - | - |
| | Lower Limit | - | - | 21,000 | - | - | - | - |
| | | Ave. | - | 22,167 | - | - | - | - |
| MLVSS/MLSS | Upper Limit | - | - | 0.32 | - | - | - | - |
| | Lower Limit | - | - | 0.30 | - | - | - | - |
| | Ave. | - | - | 0.31 | - | - | - | - |
| SV30(%) | | - | - | 98 | - | - | 97 | - |
| ORP(mV) | | 128 | 128 | 130 | - | 127 | 126 | - |
| DO(mg/L) | | - | 3.6 | 6.2 | - | 3.1 | 7.6 | - |

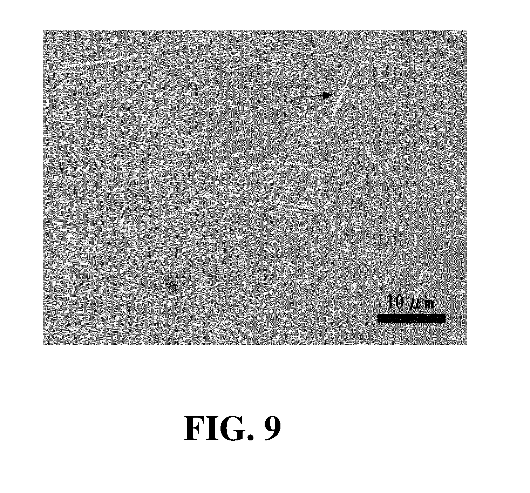

A biological treatment liquid (5') was observed using a differential interference contrast microscope in the same manner as in Example 1. As a result, acicular inorganic particles were confirmed (arrow in Figure 9).

The biological treatment liquid (5') was subjected to an X-ray diffraction analysis in the same manner as in Example 1. As a result, calcium carbonate (calcite, aragonite) and sodium sulfate were detected.

The particle size distribution of the solid content of the biological treatment liquid (5') was measured in the same manner as in Example 1. As a result, on a volume basis, a 10% size was 5.74 µm, a median size (50% size) was 19.7 µm, and a 90% size was 57.6 µm. In addition, on a number basis, a 10% size was 0.37 µm, a median size (50% size) was 0.53 µm, and a 90% size was 1.05 µm.

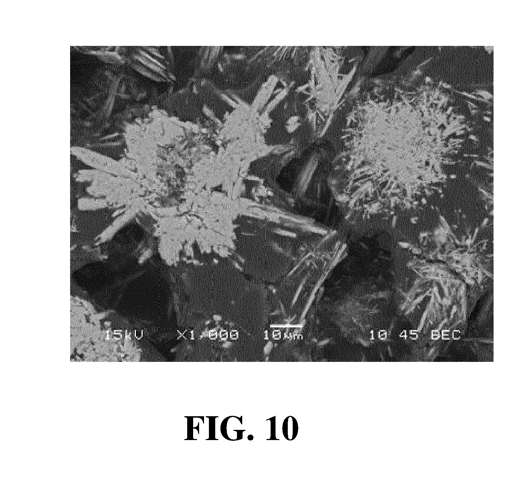

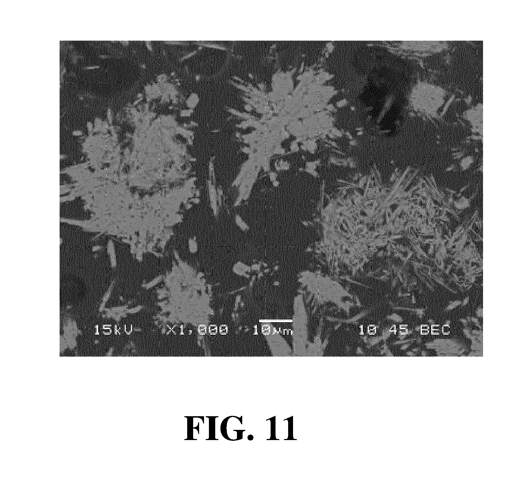

The biological treatment liquid (5') was subjected to an SEM observation and elemental analysis in the same manner as in Example 1. The results for the SEM observations in the regions that are different from each other are shown in Figures 10 and 11, respectively. As a result of the SEM observations, aggregates of acicular particles were confirmed. Also, C, O, and Ca were mainly detected in plural analyzed regions.

The filtrates (6), (6') were at a water quality suitable to be released to sewage. Further, it was seen that even when the MLSS had a high value as shown in Table 4, a biological treatment of an organic substance-containing liquid can be maintained over a long period of time of about 1 month

### Comparative Example 1

A treatment of an organic substance-containing liquid was carried out using a treatment apparatus with a treatment flow as shown in Figure 2, except that a filtration tank 6 was omitted. Here, in Comparative Example 1, a pH adjustment tank 3 and a relay tank 4 were positioned in a reverse order, and an aeration tank 5 consisted of nine tanks. Further, in Comparative Example 1, a filter material is provided in a ninth aeration tank instead of a filtration tank 6. In other words, the treatment flow was such that a ninth aeration tank also served as a filtration tank. In Comparative Example 1, an organic substance-containing liquid containing metal ions and an organic substance-containing liquid not containing metal ions, discharged from plating factories and printed circuit board factories, were used. Specifically, a degreasing agent-containing liquid containing copper ions and a degreasing agent-containing liquid not containing copper ions were used.

A degreasing agent-containing liquid containing copper ions was treated in the following manner. Specifically, a degreasing agent-containing liquid was introduced into a metal removal tank 1. In a metal removal tank 1, copper ions were removed from a degreasing agent-containing liquid, utilizing a neutralization reaction using an aqueous sodium hydroxide solution, calcium hydroxide, a diluted hydrochloric acid, and an anionic polymer aggregating agent, and a chelating reaction using a chelating agent, an aqueous sodium hydroxide solution, calcium hydroxide, and an anionic polymer aggregating agent. A degreasing agent-containing liquid after the removal of the copper ions was introduced into a relay tank 4.

In addition, a degreasing agent-containing liquid not containing copper ions was treated in the following manner. Specifically, a degreasing agent-containing liquid was introduced into a reservoir 2, and thereafter a degreasing agent-containing liquid in the reservoir 2 was introduced into a relay tank 4.

In the relay tank 4, the mixing of each of the degreasing agent-containing liquids was carried out, and thereafter the degreasing agent-containing liquid in the relay tank 4 was introduced into a pH adjustment tank 3. In the pH adjustment tank 3, a pH of the degreasing agent-containing liquid (3) was adjusted with an aqueous sodium hydroxide solution to a range of from 5.8 to 8.5.

A degreasing agent-containing liquid after the pH adjustment was introduced from a pH adjustment tank 3 to a first aeration tank, and a biological treatment liquid in a first aeration tank was sequentially introduced into a next aeration tank, in such a manner that the liquid in a first aeration tank was introduced into a second aeration tank, and the liquid in the second aeration tank into a third aeration tank. A total volume of each of the aeration tanks was 600 m³. A biological treatment liquid in each of the aeration tanks was aerated with the air while stirring.

A ninth aeration tank was provided with a unit of plural immersion membranes (average pore size: 0.08 µm) as a filter material 7, and a filtrate (6) was aspirated from a biological treatment liquid (5) in the ninth aeration tank using the unit. A pH of the filtrate (6) obtained was adjusted with an aqueous sodium hydroxide solution and a diluted hydrochloric acid, and the filtrate (6) was discharged therefrom.

Water qualities of the degreasing agent-containing liquid (3) were as follows. Specifically, TOC was 1,785 mg/L, BOD was 2,233 mg/L, COD was 2500 mg/L, T-N was 483 mg/L, T-P was 0.3 mg/L, and Cu was 0.8 mg/L. On the other hand, water qualities of the filtrate (6) were as follows. Specifically, a pH was from 7.6 to 8.5, TOC was 123 mg/L, BOD was 30 mg/L, COD was 163 mg/L, T-N was 180 mg/L, T-P was 1.5 mg/L, Cu was 0.2 mg/L, and SS was 320 mg/. Here, the numerical values for water qualities other than pH are an average of about one month.

A biological treatment liquid (5) was observed using a differential interference contrast microscope in the same manner as in Example 1. As a result, inorganic particles were confirmed.

The biological treatment liquid (5) was subjected to an X-ray diffraction analysis in the same manner as in Example 1. As a result, calcium carbonate (calcite) and sodium sulfate were detected.

The particle size distribution of the solid content of the biological treatment liquid (5) was measured in the same manner as in Example 1. As a result, on a volume basis, a 10% size was 20.5 µm, a median size (50% size) was 67.7 µm, and a 90% size was 154 µm. In addition, on a number basis, a 10% size was 3.33 µm, a median size (50% size) was 5.87 µm, and a 90% size was 14.7 µm.

The biological treatment liquid (5) was subjected to an SEM observation and elemental analysis in the same manner as in Example 1. As a result, C, O, and Ca were mainly detected in plural analyzed regions.

In Comparative Example 1, the MLSS increased and clogging of the filter material took place, so that filtration properties could not be maintained. Specifically, the MLSS in an aeration tank when clogging did not take place in a filter material was such that the upper limit was 7,200 mg/L, that the lower limit was 2,700 mg/L, and that an average was 5,550 mg/L. Also, the MLVSS was such that the upper limit was 6,300 mg/L, that the lower limit was 2,600 mg/L, and that an average was 3,475 mg/L. Further, the MLVSS/MLSS was such that the upper limit was 0.70, that the lower limit was 0.58, and that an average was 0.64. This is deduced to be due to the fact that a median size of the solid content of a biological treatment liquid exceeded 4.0 µm on a number basis and exceeded 60 µm on a volume basis, so that inorganic particles could not be sufficiently stirred in an aeration tank. Therefore, it had little choice but to carry out the treatment by reducing an amount of a biological treatment liquid introduced into an aeration tank, thereby suppressing an increase in the MLSS. As a result, the treatment efficiency of an organic substance-containing liquid was lowered, as compared to Example 1, so that it took a long period of time to treat the organic substance-containing liquid.

### Comparative Example 2

A treatment of an organic substance-containing liquid was carried out in the same manner as in Example 1. Here, the treatment of an organic substance-containing liquid was carried out in a state that the MLSS of each of biological treatment liquids (4), (4') and a biological treatment liquid (5) was less than 35,000 mg/L.

Specifically, for example, an activated sludge was drawn out of an aeration tank 5 and a filtration tank 6 to adjust MLSS of biological treatment liquids (4), (4') and a biological treatment liquid (5) to 30,000 mg/L; as a result, a time period needed to lower the BOD of a degreasing agent containing liquid (3) of Example 1 to a level suitable to be released in sewage was extended to about twice that of Example 1. Therefore, treatment efficiency of the organic substance-containing liquid was lowered as compared to Example 1, and it took a long period of time to treat the organic substance-containing liquid.

### Comparative Example 3

A treatment of an organic substance-containing liquid was carried out in the same manner as in Example 1. Here, the treatment of an organic substance-containing liquid was carried out in a state that the MLSS of each of biological treatment liquids (4), (4') and a biological treatment liquid (5) was exceeding 130,000 mg/L.

Specifically, for example, a fresh activated sludge was added to an aeration tank 5 and a filtration tank 6 to adjust MLSS of biological treatment liquids (4), (4') and a biological treatment liquid (5) to 140,000 mg/L; as a result, the clogging took place in the immersion membrane, so that a filtrate (6) could no longer be aspirated, so that the treatment of the organic substance-containing liquid could not be continued.

### Comparative Example 4

A treatment of an organic substance-containing liquid was carried out in the same manner as in Example 1. Here, addition of Ca(OH)₂ in a metal removal tank 1 was omitted. As a result, although the MLSS of biological treatment liquids (4), (4') and a biological treatment liquid (5) could be increased to a range similar to that of Example 1, clogging took place in an immersion membrane so that a filtrate (6) could not be aspirated, and whereby the treatment of an organic substance-containing liquid could not be continued. Further, a water stream was allowed to hit a surface of an immersion membrane to which deposition was adhered; as a result, the removal of the deposition from the surface of the immersion was more difficult as compared to Example 1.

As described above, in those biological treatment liquids of which MLSS was outside a given range, the lowering of treatment efficiency of an organic substance-containing liquid took place, so that treatment efficiency could not be maintained. Further, unless inorganic particles exist in a biological treatment liquid inside a filtration tank 6, it became difficult to remove deposition from the surface of a filter material.

### INDUSTRIAL APPLICABILITY

The method of treating an organic substance-containing liquid of the present invention can be utilized in the treatment of organic substance-containing liquids, such as metal plating waste liquids and waste liquids from cleaning printed-circuit boards.

### EXPLANATION OF NUMERICAL SYMBOLS

- 1: a metal removal tank
- 2: a reservoir
- 3: a pH adjustment tank
- 4: a relay tank
- 5: an aeration tank
- 6: a filtration tank
- 7: a filter material (immersion membrane)
- 8: aeration
- A: treatment flow A
- B: treatment flow B

## Claims

1. A method of treating an organic substance-containing liquid, comprising aerating a biological treatment liquid obtained by mixing an activated sludge and an organic substance-containing liquid, and subjecting the biological treatment liquid to a filtration separation with a filter material immersed in the biological treatment liquid to obtain a filtrate,
wherein said biological treatment liquid comprises inorganic particles at least immediately before the filtration separation, wherein a lower limit of the mixed liquor suspended solids in the biological treatment liquid is 35,000 mg/L, and an upper limit thereof is 130,000 mg/L.

2. The method according to claim 1, wherein a shape of the inorganic particles is acicular.

3. The method according to claim 1 or 2, wherein the inorganic particles are calcium carbonate particles.

4. The method according to any one of claims 1 to 3, wherein the inorganic particles are particles formed by previously dissolving inorganic ions in a biological treatment liquid, and aerating the biological treatment liquid.

5. The method according to any one of claims 1 to 4, wherein the filter material is taken out of the biological treatment liquid, to remove inorganic particles and an activated sludge deposited on the surface of a filter material.
